# EUROPEAN PATENT SPECIFICATION

(11) **EP 1 820 359 B1**
(45) Date of publication and mention of the grant of the patent: **08.08.2012**
(21) Application number: 04800420.4
(22) Date of filing: 29.11.2004
(51) Int. Cl.: H04Q 3/00

(54) **SERVICE ALARM CORRELATION**
SERVICE-ALARM-KORRELATION
CORRELATION D'ALARMES DE SERVICE

(43) Date of publication of application: 22.08.2007
(73) Proprietor: Telefonaktiebolaget LM Ericsson (publ), 164 83 Stockholm (SE)
(72) Inventor: GRANATH, Johan, S-113 59 Stockholm (SE)
(74) Representative: Kühn, Friedrich Heinrich
(86) International application number: PCT/SE2004/001769
(87) International publication number: WO 2006/057588

(56) References cited:
- WO-A2-2004/008718
- US-A- 5 636 203
- US-A1- 2003 206 620
- US-A1- 2004 223 461
- US-B1- 6 481 005
- GARDNER R.D. ET AL.: 'Fault resolution and alarm correlation in high-speed networks using database mining techniques' PROCEEDINGS OF 1997 INTERNATIONAL CONFERENCE ON INFORMATION, COMMMUNICATIONS AND SIGNAL PROCESSING 09 September 1997, pages 1423 - 1427, XP010264089

## Description

### TECHNICAL FIELD OF THE INVENTION

The present invention relates to a method, system and network elements for processing alarm information within a telecommunication network managed from a network management system.

### DESCRIPTION OF RELATED ART

The objective for an operator supervising the telecommunication network via a network management system is to be able to restore quickly degraded or lost services by locating and correcting a faulty unit causing the degraded or lost service. When alerted of a degraded or lost service, the operator needs hence to associate or correlate the lost service with/to the responsible faulty unit.

Network Elements (NEs) in a telecommunication network have different tasks which together aim to connect two or several user equipments (UEs) together. The NEs may depend on each other in such way that if one NE fails then another NE will fail to provide its services as consequence (a client-server relationship between NEs). An NE comprises hardware (HW) units and software. Software is stored in a memory and runs under control of a processor and operation system. HW units may further include specific HW units providing the functionality supported by the NE. Within an NE a number of functions execute. These functions may act as serving functions to client functions in other NEs and if the function is faulty in serving NE then the client NE will have its service degraded or lost as consequence. For example, example: a faulty board in a radio base station (RBS) may show up in a client Radio Network Controller (RNC) as a message "cell disabled" indicating that the operational state of the cell with the RBS containing the faulty board is out of order.

Due to commercial reasons operators tend to mix NEs from different vendors in their telecommunication networks. To limit dependencies in implementation the information to be shared between NEs is limited. In a radio network typically the information shared to set up radio functions is standardised, but not information about HW equipment.

The disadvantage of not being able to inform a client NE about the faulty HW in the serving NE is that each NE will send an alarm to the network management system, but the alarms are not correlated, i.e. have no unique association to one another. The alarms upon reception in the network management system are time stamped and stored, for example in a database 10. When displaying the alarms in an alarm list the two alarms will be separated by other alarms, which have been received from same or other NEs during same time period. The operator has then a difficult task to conclude that a service alarm from client NE is the consequence of a faulty HW in serving NE. Time and competence to locate the fault and thereby restore service increases.

Related art within this technical field is described e.g. in US 2004/0223461, showing alarm correlation in a communication network, the alarm correlation involving a suppression of sympathetic faults occurring in the network, and only promoting the root cause faults into an alarm.

### SUMMARY OF THE INVENTION

One object of the invention is to provide a solution to the problem of correlating alarms, triggered by network elements that have a dependency of one another, such that the alarms are unambiguously associated with one another. This is achieved with the system according to claim 1, the network elements in accordance with claims 6, 7 and the method in accordance with claim 8.

The invention is based on a fault identifier (FID) mechanism, which provides a unique association between the lost service and the responsible faulty unit.

### BRIEF DESCRIPTION OF THE DRAWINGS

FIG 1. is a block diagram of a managed network for a telecommunication system, and
FIG 2. is a schematic view of a list of collected alarms in the network management system.

### DETAILED DESCRIPTION OF EMBODIMENTS

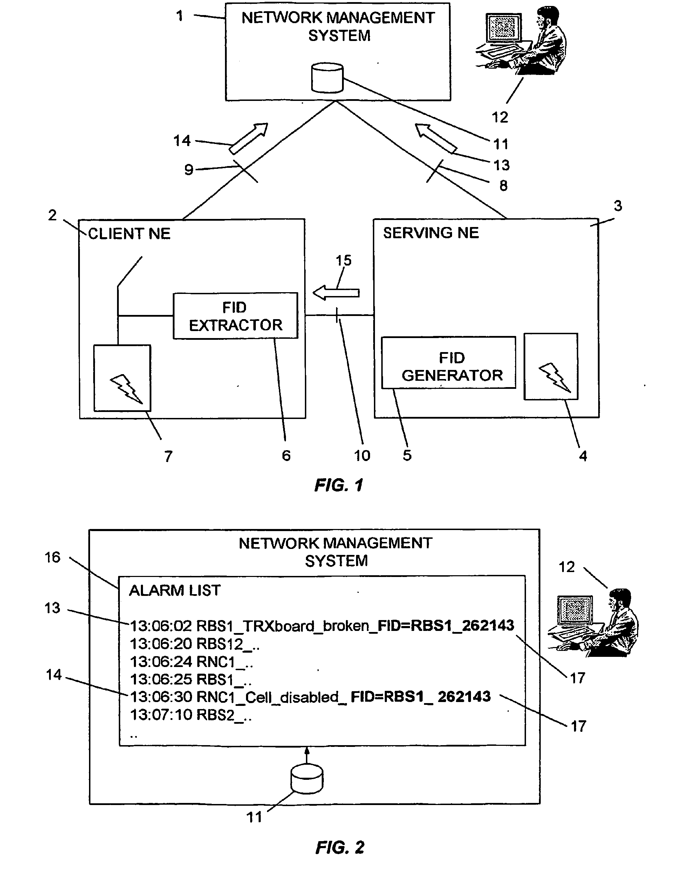

Fig. 1 shows a network management system (NMS) 1, a client network element (NE) 2 and a serving NE 3. In the serving NE there is a faulty hardware (HW) or software unit 4 and fault identity (FID) generator 5. In the client NE there is a FID extractor 6 and faulty service detection means 7. Between the serving NE and the NMS as well as between the client NE and the NMS there are management interfaces 8 and 9 respectively. Between the serving and client NEs there is a traffic interface 10.

The serving NE has the task to set up and maintain a certain set of services, which the client NE is in control over. Typically in a cellular radio network the serving NE is a radio base station (RBS) supplying, for example, user equipments (UEs) in a range of a radio cell with user data such as speech or images.

The client NE in such a cellular radio network is typically a radio network controller (RNC), having the task to control one or several connected RBSes acting as serving NEs. The RNC controls the RBSes to set up and maintain UEs with requested services, for example speech connections and controls that UEs can roam between cells served by several RBSes.

An NE emits an alarm when a faulty hardware unit is detected and makes the alarm available over the management interface. The alarm generating mechanism in the NE appends following information in the alarm:
Who: The name of the device or NE experiencing the fault
What: The condition of the fault, i.e. the symptom of the fault
When: The time the problem was detected

In addition to the NEs above, a telecommunications network has one or more NMSes, which among other things, are used to supervise the NEs. For supervision the NMS has a mechanism to receive and store alarms, for example in a database 11 and present the alarms to an operator of an operator console 12. The NMS communicates with each respective NE via the management interfaces. Management messages are exchanged between the NEs and the NMS over the management interfaces. The traffic interface between client NE and serving NE provides traffic messages for negotiating the services requested by the client NE. Specifically in a radio network the interface provides traffic messages to add and delete cells served by the RBS to support a connection between the UE and the RNC. The information exposed over the traffic interface is however limited. This is due to the fact that operators tend to mix NEs from different vendors in their telecommunication networks. Standardization bodies have agreed upon the use of general and implementation-independent service primitives in the traffic interface in order to limit dependencies between vendors' implementation. For example it is not possible to send information on the identity of a failing HW or software unit over the traffic interface, the only information exposed over the interface is that the serving NE has a failure and cannot deliver the service requested by the client NE. The disadvantage of not being able to inform a client NE about the faulty HW in the serving NE is that both NEs will send alarms to the network management system, but the alarms are not correlated, i.e. they have no unique association to one another.

The operator has then a difficult task to conclude that a service alarm from the client NE is the consequence of a faulty HW in serving NE. Time and competence to locate the fault and thereby restore service increases.

An overview of the alarm processing method pursuant to the present invention is provided in Fig 1. When the serving NE detects the faulty hardware unit it sends an alarm, said alarm referred to as a hardware alarm 13, to the NMS. The non-shown device in the serving NE who discovered the faulty hardware unit retrieves a unique fault identifier (FID) from the FID generator 5. The unique FID is generated by combining a NEs network unique name with an integer. The integer is derived from a 19 bit variable and is stepped with 1 for every new fault. An example for a FID: RBS1_262143. where RBS1 is the network unique name of the network element and 262143 is the decimal equivalent to the 19 bit variable.

The FID is appended to the hardware alarm and forwarded to the NMS over the management interface 13. The hardware alarm is stored in the database 11 and is presented to the operator in an alarm list 16 to be described below in connection with Fig. 2. Upon detection of the faulty HW or software unit the serving NE also sends a traffic message 15 to the client NE and appends the same FID to it. The traffic message informs the client NE that the requested service is no longer available. The client NE receives the traffic message with the appended FID and generates in response thereto an alarm indicative of the lost service, said alarm referred to as a service alarm 14. In particular the client NE extracts the FID from the traffic message and appends it to the service alarm 14. The service alarm with the appended FID is forwarded to the NMS over the management interface 9. The NMS upon reception stores and presents the service alarm with the appended FID in the alarm list.

Fig. 2 shows an alarm list 16 with a number of alarms received from many different serving and client NEs in the cellular radio system. There is one alarm listed on each row and the list is possible to scroll. The list is made from the stored hardware and service alarms in the database. The alarms contain the identity of the NE experiencing the fault, such as RNC or RBS and also the reporting faulty unit or service. The detection time may also be part of each alarm. The alarms are listed in the chronological order they where generated and time-stamped in the NEs. As shown there are many other alarms which have been generated in same or other NEs supervised by same NMS during the time span from the reception of the hardware alarm 13 and the reception of the service alarm 14. As shown it is easy to unambiguously associate the hardware and service alarms to each other by the FIDs 17 which both emanate from one and the same detected failure.

While the system and method shown and described is the preferred, it is apparent that the FID can be generated in other ways than from combining a NEs network unique name with an integer. A unique FID may be obtained by assigning each NE a number series and by assigning different number series to individual NEs. The FID may thus be generated within each NE as a randomly selected number within the assigned number series.

## Claims

1. A system for correlating alarms from a plurality of network elements NEs in a telecommunications network, said system comprising:
- NEs which depend on each other in such way that if one NE fails then another NE will fail to provide its services as a consequence, said failing NE referred to as serving NE (3) and said another NE referred to as client NE (2),
- serving NEs being adapted to signal traffic messages (15) to the client NE, but being unable to provide information on a faulty hardware or software unit (4), and
- a network management system (1) supervising the NEs and adapted to receive and store alarms, the system for correlating alarms **characterized in that** a serving NE (3) is provided with:
- means (5) for generating a fault identifier FID related to the faulty hardware or software unit,
- means for forwarding an alarm message (13) to the network management system and including therein the FID,
- means for providing the traffic message (15) with the same FID, and **in that**
- the client NE (2) is provided with means (6) for extracting the FID and append the extracted FID to a service alarm (14) message expressing the service fault and with means for forwarding the service alarm message to the network management system.

2. A system in accordance with claim 1, **characterized in that** the FID generator (5) is adapted to generate a randomly selected number for each fault.

3. A system in accordance with claim 1, **characterized in that** the FID generator is adapted to extract the name of the NE that the generator resides in, and combine it with an integer, which is stepped for every new detected fault.

4. A system in accordance with claim 1, **characterized in that** the information model exposed in the interface (10) between the serving NE and the client NE comprises information to set up and maintain traffic connections between the client and serving NEs, but not information to express faulty hardware units.

5. A system in accordance with claim 1, **characterized in that** the system is a radio network, the serving NE is a radio base station, and the client NE is a radio network controller.

6. A serving network element NE (3) comprising:
- program software for a service and for operating the service,
- hardware (HW),
- an interface (10) towards a client network element NE (2) said interface having service primitives for signalling availability of requested services but having no service primitives for signalling of a faulty hardware or software unit (4),
- an alarm interface (8) towards a network management system (1),
- fault detection means for detecting a faulty hardware or software unit in the serving NE,
- means for generating an alarm message (13) in response to detection of a faulty hardware or software unit by the fault detection means, the alarm message being forwarded to the network management system interface (8), **characterized by**
- a device (5) for generating unique fault indicators FIDs
- a device for appending a generated unique FID to the alarm message , and for appending the same unique FID to a traffic message (15) sent to client NE over said interface (10) towards the client NE.

7. A client network element NE (2) comprising:
- program software for a service and for operating the service,
- hardware (HW),
- an interface (10) towards a serving network element NE (3), said interface having service primitives for signalling availability of requested services but having no service primitives for signalling of faulty hardware or software unit in the serving NE,
- an alarm interface (9) towards a network management system (1),
- fault detection means (6) for extracting service primitives received from the serving NE,
- means for generating a service alarm (14) in response the fault detection means extracting service primitives indicative of the inability of the serving NE to provide the requested service, the service alarm being forwarded to the network management system interface (9),
**characterized by** the fault detection means (6) being adapted to extract a fault identifier FID appended to service primitives indicative of the inability of the serving NE to provide the requested service, and that the client NE further comprises a device for appending the extracted FID to the service alarm (14) generated in response to the fault detection means extracting service primitives indicative of the inability of the serving NE to provide the requested service.

8. A method for correlating alarms from a plurality of network elements NEs in a telecommunications network, wherein NEs which depend on each other in such way that if one NE fails then another NE will fail to provide its services as consequence, the failing NE referred to as serving NE (3) and the another NE referred to as client NE (2), said method comprising:
- the serving NE discovers a faulty hardware or software unit (4) and in response thereto forwards an alarm message indicative of the faulty unit to a network management system (1), a traffic message (15)
- the serving NE forwards to the client NE a traffic message (15) indicative of the inability of the serving NE to provide the requested service, but is unable to forward information on the faulty hardware,
- the client NE (2) receives said traffic message and forwards in response thereto a service alarm (14) indicative of the lost service to the network management system, and
- the network management system stores the service and hardware alarms and presents them to an operator (12), **characterized by**
- the serving NE upon detection of a faulty hardware or software unit (4) generates fault identity FID and associates it with the detected faulty unit ,
- the serving NE appending the FID to a traffic message (15) which it transmits to the client NE and to an alarm message (13) which it transmits to the management system,
- the client NE appending the FID to service alarm (14), and
- the network management system upon reception of the service alarm and the alarm message associates the two alarms to one another using said FID.

9. A method in accordance with claim 8, **characterized in that** the fault identifier is a randomly selected number unique for the NE in which the fault is detected.

10. A method in accordance with claim 8, **characterized in that** the fault identifier is a combination of the name of the NE in which the generator resides and an integer, which is stepped for every new detected fault.

## Patentansprüche

1. System zum zueinander in Beziehung Setzen von Störmeldungen von einer Vielzahl von Netzwerkelementen NEs in einem Telekommunikationsnetzwerk, wobei das System umfasst:
- NEs, die dergestalt voneinander abhängen, dass, wenn ein NE ausfällt, ein anderes NE infolgedessen außerstande ist, seine Dienste bereitzustellen, wobei das ausgefallene NE als versorgendes NE (3) und das andere NE als Client-NE (2) bezeichnet wird,
- wobei versorgende NEs dafür eingerichtet sind, Verkehrsnachrichten (15) an das Client-NE zu signalisieren, aber nicht imstande sind, Information über eine gestörte Hardware- oder Softwareeinheit (4) bereitzustellen, und
- ein Netzwerkmanagementsystem (1), das die NEs beaufsichtigt und dafür eingerichtet ist, Störmeldungen zu empfangen und zu speichern, wobei das System zum zueinander in Beziehung Setzen von Störmeldungen **dadurch gekennzeichnet ist, dass** ein versorgendes NE (3) mit Folgendem versehen ist:
- Mittel (5) zum Erzeugen einer Störfallkennung FID, die sich auf die gestörte Hardware- oder Softwareeinheit bezieht,
- Mittel zum Weiterleiten einer Störmeldungsnachricht (13) zum Netzwerkmanagementsystem und zum Einschließen der FID in diese,
- Mittel zum Versehen der Verkehrsnachricht (15) mit der gleichen FID; und dadurch, dass
- das Client-NE (2) mit Mitteln (6) zum Extrahieren der FID und Anhängen der extrahierten FID an eine Dienststörmeldungsnachricht (14), welche den Dienststörfall ausdrückt, und mit Mitteln zum Weiterleiten der Dienststörmeldungsnachricht zum Netzwerkmanagementsystem versehen ist.

2. System nach Anspruch 1, **dadurch gekennzeichnet, dass** der FID-Erzeuger (5) dafür eingerichtet ist, eine zufällig ausgewählte Zahl für jeden Störfall zu erzeugen.

3. System nach Anspruch 1, **dadurch gekennzeichnet, dass** der FID-Erzeuger dafür eingerichtet ist, den Namen des NE zu extrahieren, in dem sich der Erzeuger befindet, und ihn mit einer ganzen Zahl zu kombinieren, die für jeden neu ermittelten Störfall weitergezählt wird.

4. System nach Anspruch 1, **dadurch gekennzeichnet, dass** das Informationsmodell, das in der Schnittstelle (10) zwischen dem versorgenden NE und dem Client-NE exponiert wird, Information umfasst, um Verkehrsverbindungen zwischen den Client- und versorgenden NEs aufzubauen und aufrechtzuerhalten, aber keine Information, um gestörte Hardwareeinheiten auszudrücken.

5. System nach Anspruch 1, **dadurch gekennzeichnet, dass** das System ein Funknetzwerk ist, das versorgende NE eine Basisstation ist und das Client-NE ein Funknetzcontroller ist.

6. Versorgendes Netzwerkelement NE (3), umfassend:
- Programmsoftware für einen Dienst und zum Betreiben des Dienstes,
- Hardware (HW),
- eine Schnittstelle (10) zu einem Client-Netzwerkelement NE (2), wobei die Schnittstelle Dienstelemente zum Signalisieren der Verfügbarkeit angeforderter Dienste hat, aber keine Dienstelemente zum Signalisieren einer gestörten Hardware- oder Softwareeinheit (4) hat,
- eine Störmeldungsschnittstelle (8) zu einem Netzwerkmanagementsystem (1),
- Störfallermittlungsmittel zum Ermitteln einer gestörten Hardware- oder Softwareeinheit im versorgenden NE,
- Mittel zum Erzeugen einer Störmeldungsnachricht (13) als Antwort auf die Ermittlung einer gestörten Hardware- oder Softwareeinheit durch die Störfallermittlungsmittel, wobei die Störmeldungsnachricht zur Schnittstelle (8) des Netzwerkmanagementsystems weitergeleitet wird, **gekennzeichnet durch**:
- eine Vorrichtung (5) zum Erzeugen eindeutiger Störfallkennungen FIDs,
- eine Vorrichtung zum Anhängen einer erzeugten eindeutigen FID an die Störmeldungsnachricht und zum Anhängen der gleichen eindeutigen FID an eine Verkehrsnachricht (15), die über die Schnittstelle (10) zum Client-NE an das Client-NE gesendet wird.

7. Client-Netzwerkelement NE (2), umfassend:
- Programmsoftware für einen Dienst und zum Betreiben des Dienstes,
- Hardware (HW),
- eine Schnittstelle (10) zu einem versorgenden Netzwerkelement NE (3), wobei die Schnittstelle Dienstelemente zum Signalisieren der Verfügbarkeit angeforderter Dienste hat, aber keine Dienstelemente zum Signalisieren einer gestörten Hardware- oder Softwareeinheit im versorgenden NE hat,
- eine Störmeldungsschnittstelle (9) zu einem Netzwerkmanagementsystem (1),
- Störfallermittlungsmittel (6) zum Extrahieren von Dienstelementen, die vom versorgenden NE empfangen wurden,
- Mittel zum Erzeugen einer Dienststörmeldung (14) als Antwort darauf, dass die Störfallermittlungsmittel Dienstelemente extrahieren, die auf die Unfähigkeit des versorgenden NE hinweisen, den angeforderten Dienst bereitzustellen, wobei die Dienststörmeldung zur Schnittstelle (9) des Netzwerkmanagementsystems weitergeleitet wird,
**dadurch gekennzeichnet, dass** die Störfallermittlungsmittel (6) dafür eingerichtet sind, eine Störfallkennung FID zu extrahieren, die an Dienstelemente angehängt ist, die auf die Unfähigkeit des versorgenden NE hinweisen, den angeforderten Dienst bereitzustellen, und dass das Client-NE ferner eine Vorrichtung zum Anhängen der extrahierten FID an die Dienststörmeldung (14) umfasst, die als Antwort darauf erzeugt wird, dass die Störfallermittlungsmittel Dienstelemente extrahieren, die auf die Unfähigkeit des versorgenden NE hinweisen, den angeforderten Dienst bereitzustellen.

8. Verfahren zum zueinander in Beziehung Setzen von Störmeldungen von einer Vielzahl von Netzwerkelementen NE in einem Telekommunikationsnetzwerk, worin NEs dergestalt voneinander abhängen, dass, wenn ein NE ausfällt, ein anderes NE infolgedessen außerstande ist, seine Dienste bereitzustellen, wobei das ausgefallene NE als versorgendes NE (3) und das andere NE als Client-NE (2) bezeichnet wird, wobei das Verfahren umfasst:
- das versorgende NE entdeckt eine gestörte Hardware- oder Softwareeinheit (4) und leitet als Antwort darauf eine Störmeldungsnachricht, die auf die gestörte Einheit hinweist, zu einem Netzwerkmanagementsystem (1) weiter,
- das versorgende NE leitet eine Verkehrsnachricht (15) zum Client-NE weiter, die auf die Unfähigkeit des versorgenden NE hinweist, den angeforderten Dienst bereitzustellen, ist aber nicht imstande, Information über die gestörte Hardware weiterzuleiten,
- das Client-NE (2) empfängt die Verkehrsnachricht und leitet als Antwort darauf eine Dienststörmeldung (14) zum Netzwerkmanagementsystem weiter, die auf den verlorenen Dienst hinweist, und
- das Netzwerkmanagementsystem speichert die Dienst- und Hardwarestörmeldungen und legt sie einem Bediener (12) vor, **dadurch gekennzeichnet**:
- das versorgende NE erzeugt bei Ermittlung einer gestörten Hardware- oder Softwareeinheit (4) eine Störfallkennung FID und ordnet sie der ermittelten gestörten Einheit zu,
- das versorgende NE hängt die FID an eine Verkehrsnachricht (15) an, die es zum Client-NE überträgt, und an eine Störmeldungsnachricht (13), die es zum Managementsystem überträgt,
- das Client-NE hängt die FID an eine Dienststörmeldung (14) an, und
- das Netzwerkmanagementsystem ordnet bei Empfang der Dienststörmeldung und der Störmeldungsnachricht die beiden Störmeldungen unter Verwendung der FID einander zu.

9. Verfahren nach Anspruch 8, **dadurch gekennzeichnet, dass** die Störfallkennung eine zufällig ausgewählte Zahl ist, die für das NE, in dem der Störfall ermittelt wird, eindeutig ist.

10. Verfahren nach Anspruch 8, **dadurch gekennzeichnet, dass** die Störfallkennung eine Kombination aus dem Namen des NE, in dem sich der Erzeuger befindet, und einer ganzen Zahl, die für jeden neu ermittelten Störfall weitergezählt wird, ist.

## Revendications

1. Système destiné à corréler des alarmes provenant d'une pluralité d'éléments de réseau, NE, dans un réseau de télécommunication, ledit système comprenant :
- des éléments NE qui dépendent les uns des autres d'une manière telle que si un élément NE est défaillant, alors l'autre élément NE ne sera pas en mesure de fournir ses services en conséquence, ledit élément NE défaillant étant appelé « élément NE de service » (3) et ledit autre élément NE étant appelé « élément NE de système client » (2) ;
- les éléments NE de service étant aptes à signaler des messages de trafic (15) à l'élément NE de système client, mais n'étant pas en mesure de fournir des informations sur une unité logicielle ou matérielle défectueuse (4) ; et
- un système de gestion de réseau (1) surveillant les éléments NE, et apte à recevoir et à stocker des alarmes, le système destiné à corréler les alarmes étant **caractérisé en ce qu'**un élément NE de service (3) est doté des éléments ci-dessous :
- un moyen (5) pour générer un identifiant de défaillance, FID, connexe à l'unité logicielle ou matérielle défectueuse ;
- un moyen pour acheminer un message d'alarme (13) au système de gestion de réseau, et inclure dans celui-ci l'identifiant FID ;
- un moyen pour annexer au message de trafic (15) le même identifiant FID ; et **caractérisé en ce que** :
- l'élément NE de système client (2) est doté d'un moyen (6) pour extraire l'identifiant FID et pour annexer l'identifiant FID extrait à un message d'alarme de service (14) indiquant la défaillance de service, et est doté d'un moyen pour acheminer le message d'alarme de service au système de gestion de réseau.

2. Système selon la revendication 1, **caractérisé en ce que** le générateur d'identifiants FID (5) est apte à générer un nombre sélectionné de manière aléatoire pour chaque défaillance.

3. Système selon la revendication 1, **caractérisé en ce que** le générateur d'identifiants FID est apte à extraire le nom de l'élément NE dans lequel le générateur réside, et à le combiner avec un nombre entier, lequel est incrémenté pour chaque nouvelle défaillance détectée.

4. Système selon la revendication 1, **caractérisé en ce que** le modèle d'informations affichées au niveau de l'interface (10) entre l'élément NE de service et l'élément NE de système client comprend des informations visant à établir et à maintenir des connexions de trafic entre les éléments NE de service et de système client, mais pas d'informations permettant d'exprimer des unités matérielles défectueuses.

5. Système selon la revendication 1, **caractérisé en ce que** le système est un réseau radio, l'élément NE de service est une station de base radio, et l'élément NE de système client est un contrôleur de réseau radio.

6. Élément de réseau de service, NE, (3) comprenant :
- un logiciel de programme destiné à un service et à l'exploitation du service ;
- un équipement matériel (HW) ;
- une interface (10) vers un élément de réseau de système client, NE (2), ladite interface présentant des primitives de service pour signaler la disponibilité des services demandés, mais ne présentant pas de primitives de service pour signaler une unité logicielle ou matérielle défectueuse (4) ;
- une interface d'alarme (8) vers un système de gestion de réseau (1) ;
- un moyen de détection de défaillance pour détecter une unité logicielle ou matérielle défectueuse dans l'élément NE de service ;
- un moyen pour générer un message d'alarme (13) en réponse à la détection d'une unité logicielle ou matérielle défectueuse par le moyen de détection de défaillance, le message d'alarme étant acheminé à l'interface du système de gestion de réseau (8), **caractérisé par** :
- un dispositif (5) pour générer des identifiants de défaillance, FID, uniques
- un dispositif pour annexer un identifiant FID unique généré au message d'alarme, et pour annexer le même identifiant FID unique à un message de trafic (15) envoyé à l'élément NE de système client sur ladite interface (10) vers l'élément NE de système client.

7. Élément de réseau de système client, NE (2) comprenant :
- un logiciel de programme destiné à un service et à l'exploitation du service ;
- un équipement matériel (HW) ;
- une interface (10) vers un élément de réseau de service, NE (3), ladite interface présentant des primitives de service pour signaler la disponibilité des services demandés, mais ne présentant pas de primitives de service pour signaler une unité logicielle ou matérielle défectueuse dans l'élément NE de service ;
- une interface d'alarme (9) vers un système de gestion de réseau (1) ;
- un moyen de détection de défaillance (6) pour extraire des primitives de service reçues à partir de l'élément NE de service ;
- un moyen pour générer une alarme de service (14) en réponse à l'extraction, par le moyen de détection de défaillance, des primitives de service indiquant l'incapacité de l'élément NE de service à fournir le service demandé, l'alarme de service étant acheminée à l'interface du système de gestion de réseau (9) ;
**caractérisé en ce que** le moyen de détection de défaillance (6) est apte à extraire un identifiant FID de défaillance annexé à des primitives de service indiquant l'incapacité de l'élément NE de service à fournir le service demandé, et **en ce que** l'élément NE de système client comprend en outre un dispositif pour annexer l'identifiant FID extrait à l'alarme de service (14) générée en réponse à l'extraction, par le moyen de détection de défaillance, de primitives de service indiquant l'incapacité de l'élément NE de service à fournir le service demandé.

8. Procédé destiné à corréler des alarmes provenant d'une pluralité d'éléments de réseau, NE, dans un réseau de télécommunication, dans lequel les éléments NE dépendent les uns des autres d'une manière telle que si un élément NE est défaillant, alors l'autre élément NE ne sera pas en mesure de fournir ses services en conséquence, ledit élément NE défaillant étant appelé « élément NE de service » (3) et ledit autre élément NE étant appelé « élément NE de système client » (2), ledit procédé comprenant les étapes ci-dessous dans lesquelles :
- l'élément NE de service détecte une unité logicielle ou matérielle défectueuse (4), et, en réponse, achemine un message d'alarme indiquant l'unité défectueuse à un système de gestion de réseau (1) ;
- l'élément NE de service achemine, à l'élément NE de système client, un message de trafic (15) indiquant l'incapacité de l'élément NE de service à fournir le service demandé, mais n'est pas en mesure d'acheminer des informations sur le matériel défectueux ;
- l'élément NE de système client (2) reçoit ledit message de trafic et achemine en réponse une alarme de service (14) indiquant la perte de service au système de gestion de réseau ; et
- le système de gestion de réseau stocke les alarmes de service et alarmes de matériel et les présente à un opérateur (12), **caractérisé en ce que** :
- l'élément NE de service, suite à la détection d'une unité logicielle ou matérielle défectueuse (4), génère un identifiant FID de défaillance et l'associe à l'unité défectueuse détectée ;
- l'élément NE de service annexe l'identifiant FID à un message de trafic (15), qu'il transmet à l'élément NE de système client, ainsi qu'à un message d'alarme (13), qu'il transmet au système de gestion ;
- l'élément NE de système client annexe l'identifiant FID à l'alarme de service (14) ; et
- le système de gestion de réseau, suite à la réception de l'alarme de service et du message d'alarme, associe les deux alarmes mutuellement en utilisant ledit identifiant FID.

9. Procédé selon la revendication 8, **caractérisé en ce que** l'identifiant de défaillance est un nombre sélectionné de manière aléatoire unique pour l'élément NE dans lequel la défaillance est détectée.

10. Procédé selon la revendication 8, **caractérisé en ce que** l'identifiant de défaillance est une combinaison du nom de l'élément NE dans lequel le générateur réside et d'un nombre entier, lequel est incrémenté pour chaque nouvelle défaillance détectée.
